# FASCICULE DE BREVET EUROPEEN

(11) **EP 0 377 374 B1**
(45) Date de publication et mention de la délivrance du brevet: **19.05.1993**
(21) Numéro de dépôt: 89403602.9
(22) Date de dépôt: 21.12.1989
(51) Int. Cl.: B23Q 17/24

(54) **Système de mesure de la position d'un outil à bec sur une machine-outil**
Messsystem für eine Werkzeugeinstellung in einer Werkzeugmaschine
Position measuring system for a tool onto a machine tool

(30) Priorité: 23.12.1988 FR 8817114
(43) Date de publication de la demande: 11.07.1990
(73) Titulaire: COMMISSARIAT A L'ENERGIE ATOMIQUE, 75015 Paris Cédex 15 (FR)
(72) Inventeur: Demesy, Michel, F-21121 Fontaine Les Dijon (FR); Boulet, Marcel, F-21490 Vardis et Chaignot (FR); Clair, Gérard, F-21000 Dijon (FR); Ponsot, Jean-Louis, F-21000 Dijon (FR)
(74) Mandataire: Mongrédien, André

(56) Documents cités:
- FR-A- 2 302 817
- FR-A- 2 580 534
- FR-A- 2 593 103
- US-A- 2 249 121

## Description

L'invention a trait à un sytème de mesure de la position d'un outil à bec sur une machine-outil, notamment à commande numérique.

La bonne connaissance de ce que l'on appelle les jauges de l'outil par rapport aux jauges d'une pièce à usiner est nécessaire pour obtenir des usinages précis. Il est en particulier nécesaire, dans le cas d'un outil muni d'un bec à arête tranchante, tel qu'un outil de tournage, de disposer non seulement de la position du support de l'outil par rapport au support de la pièce mais encore de la forme du bec de l'outil, qui varie avec l'usure.

La forme du bec de l'outil est traditionnellement mesurée au moyen d'un projecteur de profil qui l'éclaire et en donne une image grossie sur l'écran. Il est toutefois nécessaire de démonter l'outil, ce qui interdit de procéder à un tel contrôle entre deux passes d'usinage, notamment pour détecter une usure supplémentaire de l'outil, car toutes les jauges de l'outil seraient alors perdues.

Par ailleurs, le jaugeage de l'outil est effectué sur un banc de préréglage séparé, ce qui nécessite donc de démonter le porte-outils de la machine outil et ne permet son remontage qu'avec une imprécision incompatible avec un usinage de précision.

L'objet de l'invention est de s'affranchir de ces imprécisions en utilisant un système qui soit entièrement monté sur la machine et n'implique aucun démontage de l'outil ou du porte-outils.

Un brevet antérieur du Commissariat à l'Energie atomique (FR-A-2 580 534) permet de jauger un outil de tournage sans le démonter et en utilisant une image de cet outil sur un écran muni de la trace fixe d'un réticule servant d'origine. Les réglages principaux consistent à amener la pointe de l'outil sur un axe vertical ZZ' de hauteur de pointe en ajustant la position du porte-outil sur une tourelle tournant autour de l'axe de hauteur de pointe et à placer la tourelle à une position angulaire déterminèe pour rendre l'arête d'outil tangente à la direction d'usinage XX'. On se sert pour cela d'un étalon fixé au mandrin du tour, dont le déplacement de pointe fournit une référence angulaire. Un réglage supplémentaire consiste à régler la hauteur de pointe de l'outil à l'aide d'une image perpendiculaire à la précédente.

On peut remarquer que cette invention antérieure nécessite deux systèmes optiques d'illumination et de prise d'image séparés, ce qui complique l'installation. De plus, l'étalon n'est pas solidaire de l'outil et la tourelle ne peut porter qu'un seul outil en pratique. Enfin, l'invention permet plutôt d'évaluer les coordonnées des pointes d'une pluralité d'outils par rapport à un étalon unique que de corriger la position et l'orientation de la pointe d'un outil par rapport au bâti du tour.

Le système de mesure de position selon l'invention est utilisable pour un outil à bec déplaçable suivant une direction d'usinage et une direction d'avance et qui occupe une position fixe dans une direction dite de hauteur de pointe. Il comprend une caméra disposée sur un support déplaçable, un étalon situé sur la machine et des moyens de repérage permettant de comparer des images successives de l'outil et de l'étalon obtenues par la caméra, et se caractérisé en ce que le support est rotatif autour d'un axe paralléle à la direction d'usinage pour occuper deux positions dans lesquelles la caméra est orientée en direction d'avance et en direction de hauteur de pointe et dans chacune desquelles les images de l'outil et de l'étalon sont obtenues. Les moyens de repérage peuvent être un quadrillage mobile engendré automatiquement sur un écran. Par ailleurs, pour certaines applications, le support de la caméra est rotatif pour permettre à celle-ci d'occuper une position dirigée dans la direction d'avance de l'outil mais en sens inverse de la position définie précédemment où la caméra est dirigée dans cette même direction.

L'invention va maintenant être décrite plus en détail à l'aide des figures annexées dont l'énumération suit et qui sont données à titre illustratif et non limitatif.
- La figure 1 est une vue de face d'une machine-outil équipée du dispositif selon l'invention ;
- La figure 2 est une vue partielle agrandie montrant les composants essentiels de l'invention ;
- La figure 3 est un schéma général d'explication des mesures ; et
- Les figures 4, 5 et 6 indiquent comment effectuer le jaugeage d'un outil.

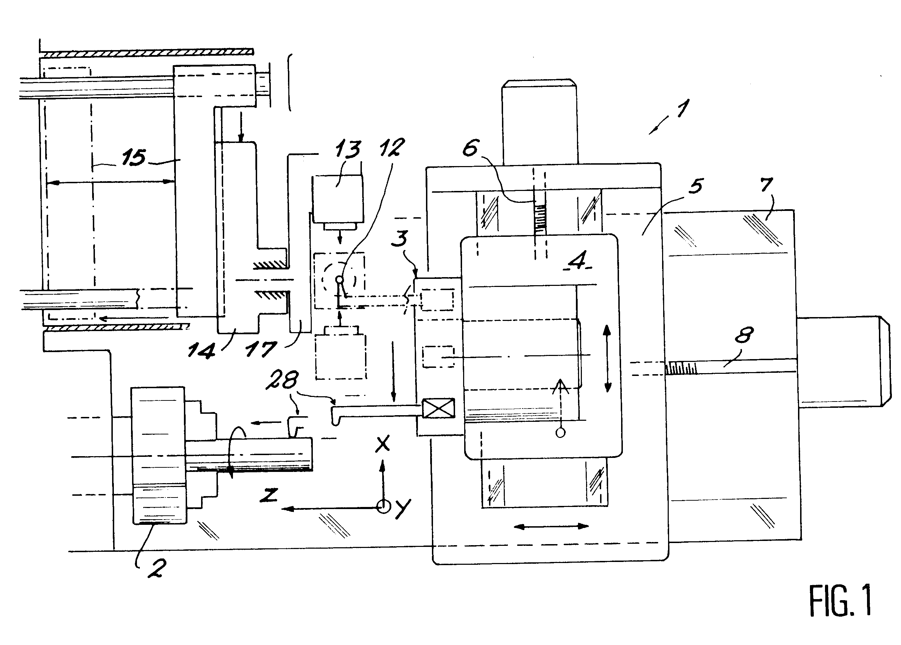

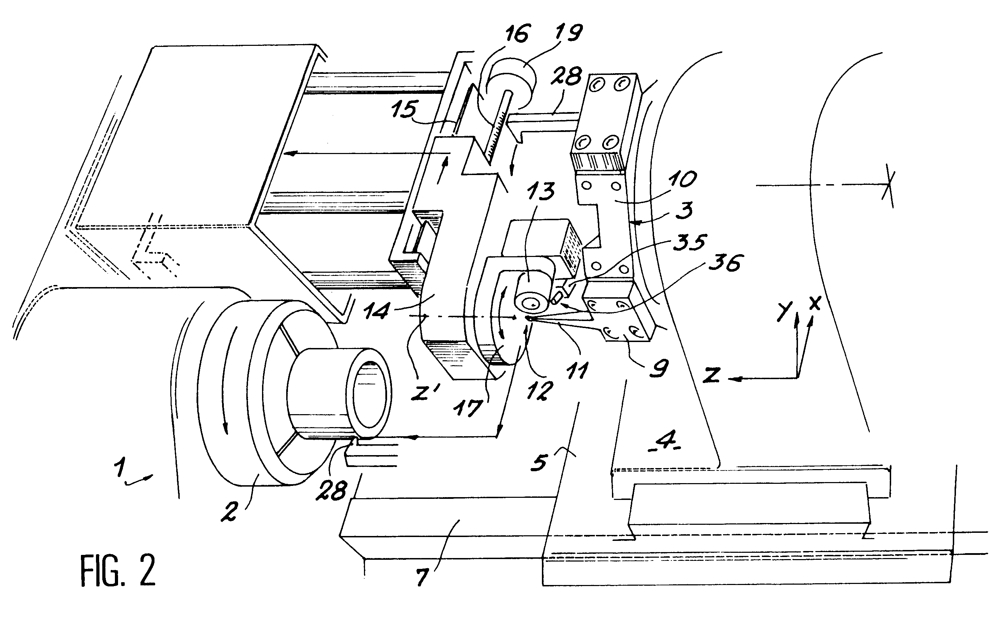

Les figures 1 et 2 représentent un tour 1 à commande numérique muni d'un mandrin 2 de serrage de la pièce à tourner et d'un porte-outils 3 qui est ici un barillet octogonal et qui permet donc d'usiner successivement avec plusieurs outils sans démontage. Le porte-outils 3 dépend d'une tourelle 4 sur laquelle il est donc mobile en rotation par huitièmes de tour, et la tourelle dépend elle-même d'un chariot 5 par rapport auquel elle est mobile dans une direction d'avance X perpendiculaire à l'axe de rotation du mandrin 2 au moyen d'une vis d'Archimède 6. Le chariot 5 est relié au bâti 7 par l'intermédiaire d'une seconde vis d'Archimède 8 parallèle à l'axe de rotation du mandrin 2, si bien que le chariot 5 est déplaçable suivant une direction d'usinage Z. Le porte-outils 3 est par contre immobile par rapport à une troisième direction, perpendiculaire aux deux précédentes, dite de hauteur de pointe Y. La hauteur de pointe peut être définie comme étant la distance minimale d'un outil d'usinage 28 par rapport à l'axe de rotation du mandrin 2 quand la tourelle 4 se déplace suivant la direction d'avance X.

Un étalon 9 est fixé sur une des facettes 10 du porte-outils 3 (figure 2). L'étalon 9 a pour but de fournir un référentiel de mesure et peut donc prendre des formes très variées, mais ressemble avantageusement à un outil réel. Il présente avantageusement une largeur constante 11 dans la direction de hauteur de pointe Y et un bec 12 qui présente un profil d'extrémité arrondi quand on le regarde dans cette même direction de hauteur de pointe Y.

Une caméra 13 se trouve à proximité de l'étalon 9. Elle est fixée à un support 14 déplaçable en direction d'avance X par rapport au bâti 7 par coulissement sur une glissière 15 et pilotage sur une vis à billes 16. La caméra 13 est plus exactement fixée sur une tourelle rotative 17 qui peut tourner par rapport au support 14 proprement dit autour d'un axe Z' parallèle à la direction d'usinage Z pour occuper trois positions : une position pour laquelle la caméra 13 est orientée dans la direction d'avance X, une deuxième position perpendiculaire à la précédente où la caméra est orientée en direction de hauteur de pointe Y et une troisième position dans laquelle la caméra 13 est encore orientée dans la direction d'avance X mais dans un sens opposé à celui de la première position.

L'installation comprend également en particulier un moteur pas à pas 19 qui entraîne en rotation la vis à billes 16 et un écran de vidéoscopie 21 relié à la caméra 13. L'ensemble de ces moyens est piloté par ordinateur.

Un photoémetteur 35 prolongé par une fibre optique 36 éclaire par ailleurs l'espace juste devant l'objectif de la caméra 13.

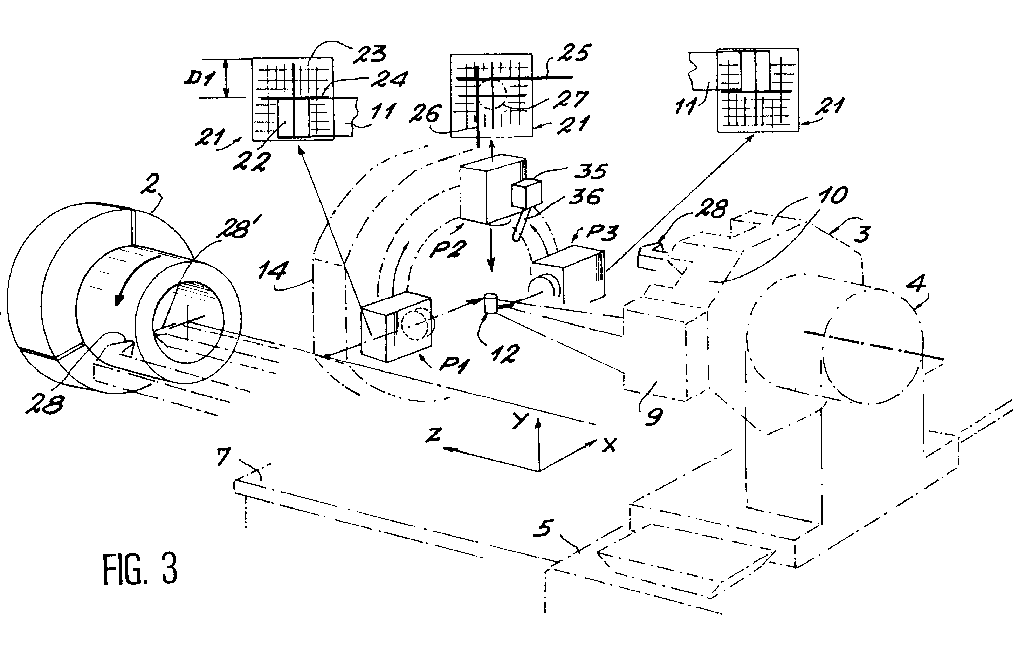

Les mesures des jauges de l'outil 28 (figures 3 à 6) consistent à prendre des images de cet outil 28 suivant deux orientations perpendiculaires qui sont comparées à des images de l'étalon 9 prises dans les mêmes conditions.

L'image de face de l'étalon 9 par la caméra 13 orientée dans la première ou la troisième position (P1 ou P2 sur la figure 3) est un rectangle 22 dont la position d'un côté latéral 24 par rapport au bord de l'écran 21 (distance D1) permet d'obtenir la hauteur de pointe de l'étalon 9. On peut s'aider pour cela d'un quadrillage 23 engendré sur l'écran 21 par l'ordinateur de commande.

La caméra 13 est ensuite retournée, mise dans la deuxième position P2, et l'étalon 9 est vu de profil.

On déplace alors les lignes du quadrillage 23 de façon que deux lignes perpendiculaires 25 et 26 de celui-ci soient tangentes à l'image de profil, arrondie, 27 du bec 12.

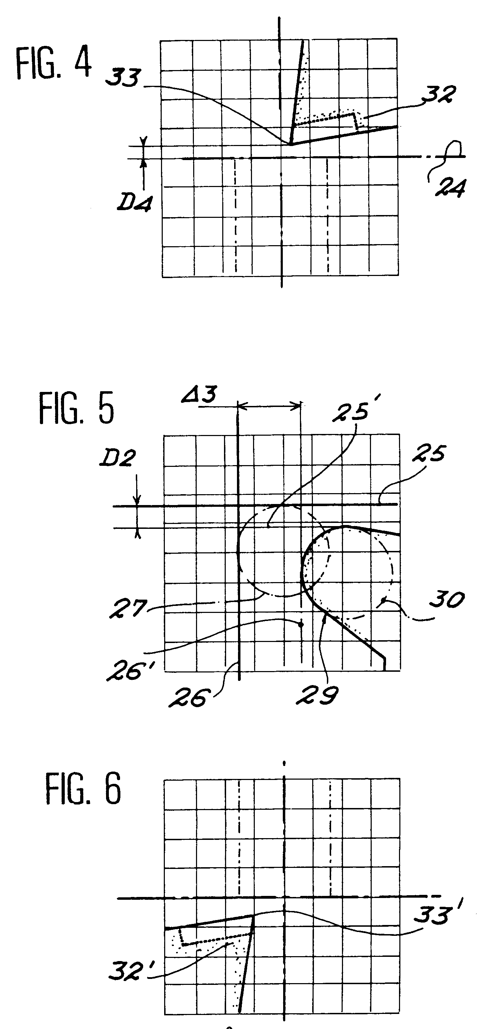

On retire ensuite le support 14 par une rotation contrôlée du moteur 19 et on bascule le porte-outils 3. On met un outil 28 fixé au porte-outils 3 à la position angulaire dans laquelle se trouvait précédemment l'étalon 9 et on ramène la caméra 13 où elle se trouvait précédemment par une rotation contrôlée inverse du moteur pas à pas 19. L'image de profil 29 de l'outil 28 occupe (figure 5) une position différente de celle 27 de l'étalon 9, et la mesure consiste à repérer les deux distances D2 et D3 qui séparent les lignes 25 et 26 des lignes respectives 25' et 26' qui leur sont parallèles et tangentes à l'image de profil de l'outil 29. Ces deux distances D2 et D3 correspondent respectivement à des décalages en direction d'usinage et en direction d'avance du bec de l'outil 28 par rapport au bec 12 de l'étalon 9. Comme les jauges de l'étalon 9 sont connues et indéréglables puisque l'étalon 9 n'est jamais démonté, on peut ainsi en déduire la position de l'outil 28 par rapport au porte-outils 3, au mandrin 2 et à la pièce à usiner.

On peut engendrer sur l'écran 21 des cercles 30 mobiles de diamètre variable que l'on fait venir sur l'image du bec 31 de l'outil 28 afin de vérifier son rayon de courbure et donc l'usure de l'outil 28.

On imprime enfin une rotation de 90° à la caméra 13 pour obtenir l'image de face 32 de l'outil 28, vue dans la direction d'avance de celui-ci (figure 4). On mesure la distance D4 de l'arête 33 à la ligne 24 soit directement en rappelant le quadrillage qui contenait cette ligne, soit en mesurant la distance entre l'arête 33 et le bord de l'écran 21 puis en la comparant avec la distance D1. On en déduit la hauteur de pointe de l'outil 28.

La troisième position de la caméra 13 est utilisée quand on est en présence d'un outil de tournage intérieur 28', dont l'arête 33' est orientée en sens opposé dans la direction d'avance X : on effectue les mêmes mesures en utilisant la caméra 13 dans sa deuxième et sa troisième positions pour obtenir dans tous les cas une image 32' où l'arête 33' de l'outil est dans la caméra 13 (figure 6).

La camera 13 permet d'obtenir des mesures des jauges d'outils avec des incertitudes de l'ordre de 5 µm. Les mesures sont de plus très rapides car elles peuvent être en partie automatisées et sont directement utilisables pour des machines-outils à commande numérique. L'usinage est ensuite effectué mais les mesures peuvent bien entendu être renouvelées entre deux passes d'une même pièce si on soupçonne une usure rapide de l'outil.

## Revendications

1. Système de mesure de position d'un outil (28) sur une machine-outil (1), l'outil étant déplaçable suivant une direction d'usinage (Z) et une direction d'avance (X) et occupant une position fixe dans une direction de hauteur de pointe (Y), une caméra (13) disposée sur un support (14) deplaçable, un étalon (9) situé sur la machine et des moyens de repérage (23) permettant de comparer des images successives de l'outil et de l'étalon obtenues par la caméra, caractérisé en ce que le support est rotatif autour d'un axe (Z') parallèle à la direction d'usinage pour occuper deux positions dans lesquelles la camera est orientée en direction d'avance et en direction de hauteur de pointe et dans chacune desquelles les images de l'outil et de l'étalon sont obtenues.

2. Système de mesure de position suivant la revendication 1, caractérisé en ce qu'il comprend une source lumineuse (35) pour éclairer l'étalon (9) et le bec (31) de l'outil (28).

3. Système de mesure de position suivant l'une quelconque des revendications 1 ou 2, caractérisé en ce que le support est rotatif pour occuper également une position orientée en direction d'avance opposée à la précédente.

4. Système de mesure de position suivant l'une quelconque des revendications 1 à 3, caractérisé en ce qu'il comprend un écran (21) sur lequel les images de la caméra (13) sont projetées, les moyens de repérage consistant en un quadrillage (23) engendré sur l'écran.

5. Système de mesure de position suivant la revendication 4, caractérisé en ce que le quadrillage est mobile.

6. Système de mesure de position suivant la revendication 5, caractérisé en ce que les moyens de repérage comprennent également des cercles mobiles (30) de diamètres variés sur l'écran.

7. Système de mesure de position suivant l'une quelconque des revendications 1 à 6, caractérisé en ce que l'outil et l'étalon sont solidaires et montés sur un barillet porte-outils (3) mobile sur la machine.

## Patentansprüche

1. Meßsystem für eine Werkzeugeinstellung in einer Werkzeugmaschine (1) bestehend aus einem in Bearbeitungsrichtung (Z) und in Zustellrichtung (X) bewegbaren und in Richtung der Spitzenhöhe (Y) feststehenden Werkzeug, einer auf einem beweglichen Support (14) angebrachten Kamera (13), einer an der Maschine angebrachten Vergleichslehre (9) sowie Einstellhilfen (23), die es gestatten, die von der Kamera aufgenommenen aufeinanderfolgenden Bilder von Werkzeug und Vergleichslehre zu vergleichen,
dadurch **gekennzeichnet**,
daß der Support drehbar um die parallel zur Bearbeitungsrichtung liegende Achse (Z') angebracht ist und so zwei Positionen einnehmen kann, auf welchen die Kamera einmal in Richtung der Zustellung und zweitens in Richtung der Spitzenhöhe ausgerichtet wird, wobei in jeder Position sowohl eine Aufnahme vom Werkzeug als auch von der Vergleichslehre gemacht wird.

2. Meßsystem für eine Werkzeugeinstellung gemäß des Anspruches 1, dadurch gekennzeichnet, daß es über eine Lichtquelle (35) verfügt, um die Vergleichslehre (9) und die Spitze (31) des Werkzeugs (28) zu beleuchten.

3. Meßsystem für eine Werkzeugeinstellung gemäß einer der Ansprüche nach 1 oder 2, dadurch gekennzeichnet, daß es über einen drehbaren Support verfügt, um ebenfalls eine Position in Zustellrichtung, aber gegenüber der obigen, einzunehmen.

4. Meßsystem für eine Werkzeugeinstellung gemäß einer der Ansprüche nach 1 bis 3, dadurch gekennzeichnet, daß es erstens über einen Bildschirm (21) verfügt, auf dem die von der Kamera (13) aufgenommenen Bilder dargestellt werden, sowie zweitens über Einstellhilfen, die aus einem in den Bildschirm eingearbeiteten Rasternetz (23) bestehen.

5. Meßsystem für eine Werkzeugeinstellung gemäß des Anspruches 4, dadurch gekennzeichnet, daß das Rasternetz verschiebbar ist.

6. Meßsystem für eine Werkzeugeinstellung gemäß des Anspruches 5, dadurch gekennzeichnet, daß zu den Einstellhilfen ebenfalls auf dem Bildschirm bewegliche Kreise (30) mit variablen Durchmesser gehören.

7. Meßsystem für eine Werkzeugeinstellung gemäß einer der Ansprüche nach 1 bis 6, dadurch gekennzeichnet, daß Werkzeug und Vergleichslehre aus einem Bauteil bestehen und an einem Mehrfachmeißelhalter (3) befestigt sind, der beweglich auf der Maschine angebracht ist.

## Claims

1. System for measuring the position of a tool (28) on a machine tool (1), the tool being displaceable in a machining direction (Z) and an advance direction (X) and occupying a fixed position in a centre height direction (Y), a camera (13) located on a displaceable support (14), a standard (9) located on the machine and reference marking means (23) permitting the comparison of successive images of the tool and the standard obtained by the camera and characterized in that the support rotates about an axis (Z') parallel to the machining direction for occupying two positions in which the camera is oriented in the advance direction and the centre height direction and in each of which the images of the tool and the standard are obtained.

2. Position measuring system according to claim 1, characterized in that it comprises a light source (35) for illuminating the standard (9) and the nose (31) of tool (28).

3. Position measuring system according to claim 1 or 2, characterized in that the support rotates, so as to also occupy a position oriented in the advance direction opposite to the preceding direction.

4. Position measuring system according to any one of the claims 1 to 3, characterized In that it comprises a screen (21) onto which are projected the images of camera (13), the reference marking means consisting of a square grid (23) produced on the screen.

5. Position measuring system according to claim 4, characterized in that the square grid is mobile.

6. Position measuring system according to claim 5, characterized in that the reference marking means also comprise mobile circles (30) of various diameters on the screen.

7. Position measuring system according to any one of the claims 1 to 6, characterized in that the tool and the standard are integral and mounted on a tool holder (3), which is mobile on the machine.
